# EUROPEAN PATENT SPECIFICATION

(11) **EP 3 984 723 B1**
(45) Date of publication and mention of the grant of the patent: **07.06.2023**
(21) Application number: 20201773.7
(22) Date of filing: 14.10.2020
(51) Int. Cl.: B29C 65/06

(54) **OSCILLATING HEAD OF A VIBRATION WELDING DEVICE, A FRAME OF A VIBRATION WELDING DEVICE, A VIBRATION WELDING DEVICE AS WELL AS A RETROFIT-KIT AND A RETROFITTING METHOD**
SCHWINGKOPF EINER VIBRATIONSSCHWEISSVORRICHTUNG, RAHMEN EINER VIBRATIONSSCHWEISSVORRICHTUNG, VIBRATIONSSCHWEISSVORRICHTUNG SOWIE NACHRÜSTSATZ UND NACHRÜSTVERFAHREN
TÊTE D'OSCILLATION D'UN DISPOSITIF DE SOUDAGE PAR VIBRATIONS, CADRE D'UN DISPOSITIF DE SOUDAGE PAR VIBRATIONS, DISPOSITIF DE SOUDAGE PAR VIBRATIONS AINSI QU'UN KIT ET PROCÉDÉ DE MISE À JOUR

(43) Date of publication of application: 20.04.2022
(73) Proprietor: Branson Ultraschall Niederlassung der Emerson Technologies GmbH & Co. OHG, 63128 Dietzenbach (DE)
(72) Inventor: MOTOVSKY, Michal, Hlohovec, 920 01 (SK)
(74) Representative: HWP Intellectual Property

(56) References cited:
- DE-C1- 4 102 750
- TW-A- 201 006 661
- US-A- 4 086 122

## Description

### 1. Field of the invention

The present invention is related to an oscillating head of a vibration welding device, a frame of a vibration welding device and the vibration welding device comprising the oscillating head as well as the frame. Further, the present invention is related to a respective retrofit-kit for an already existing vibration welding device and a corresponding retrofitting method.

### 2. Background of the invention

Vibration welding devices having an oscillating head mounted to a frame are generally well known in the prior art. In this regard, it is referred to DE 10 2005 047 706 A1, DE 10 2006 011 971 A1, EP 1 775 102 A2 and DE 10 2018 108 979 A1.

DE 10 2005 047 706 A1 relates to a method for vibration welding. The vibration welding is performed with a plurality of mechanically decoupled oscillating heads, each of which is connected with a frequency converter. An electrical circuit connects the frequency converters such that one of the frequency converters can be operated as the master and the other frequency converters as slaves. With the help of the controlling effect of the master, both a synchronous and an asynchronous operation of the plurality of oscillating heads can be realized.

A vibration welding device and an oscillating head therefor is further described in DE 10 2006 011 971 A1. The oscillating head consists of a stationary mass body, a tool carrier with a tool for holding a workpiece and an electromagnetic drive. The electromagnetic drive is connected to the tool carrier via a spring arrangement in such a way that the tool carrier can carry out linear vibrations for a friction welding process on the workpiece. The spring arrangement has one or more spring washers which are perpendicular to the drive shaft and which are fixed in a circumferential area on the mass body and which are firmly connected in a central area with the electromagnetic drive and the tool carrier so that the vibrations of the tool carrier are purely linear vibrations centric to the drive axis. This oscillating head can be operated as a single oscillating head or mechanically and/or electrically coupled with further oscillating heads in order to create vibration welding systems of the most varied geometry for a multitude of different possible applications.

Another oscillating head is described in EP 1 775 102 A2 in combination with a quick-change device. The quick-change device comprises several clamping bodies by means of which a vibrator plate of the vibrator and a tool plate of the tool can be connected to one another in a force-locking manner. The clamping bodies are slidably mounted on the machine frame or on the oscillator in order to switch between a clamping and opening position for closing or opening. The adjusting devices consist of screws which are used both for tensioning and loosening the clamping bodies and for securing the non-positive connection.

Finally, DE 10 2018 108 979 A1 describes a vibration welding device having a mechanically coupled multiple vibrator. Within this vibration welding device, the plurality of vibration units are arranged relative to an elongated tool such that the first direction of vibrations of the individual vibration units is oriented approximately transverse to a longitudinal axis of the tool such that, during a vibration welding process, two components are weldable to each other by vibrations different than a longitudinal direction of the components.

As can be seen based on the above prior art, the oscillating head usually consists of a bridge or generally a mass body, a receiving plate for a tool of the oscillating head as well as at least one spring package or arrangement connecting the bridge and the receiving plate to each other. Further, an electromagnetic drive is used for creating the oscillating movement of the spring package and, thus, of the receiving plate and the tool attached thereto.

Furthermore, and for mounting the oscillating head to a frame of the vibration welding device, the bridge or mass body has two oppositely arranged fastening surfaces. These fastening surfaces are arranged in a plane parallel to the plane in which the receiving plate oscillates in use. As these fastening surfaces are arranged in a plane parallel to the oscillating plane of the receiving plate, they are arranged displaced from the oscillating plane along an axis perpendicular to the oscillating plane. In other words, a step is formed at opposite sides of the bridge, preferably at the sides which are transverse to a deflection direction of the spring package.

The fastening surfaces of the bridge are arranged on corresponding fastening surfaces of the frame. The fastening surfaces of the frame are for example provided by means of two support plates which are arranged at a certain height at the frame. In particular, the support plates are arranged at supports of the frame and are arranged in a plane parallel to the ground on which the frame is positioned. Thus, one support plate is arranged at one side of the frame and the other support plate is arranged at the opposite side of the frame. Usually, the fastening surfaces of the bridge and the fastening surfaces of the frame comprises respective bores which are aligned with each other and in which fastening bolts are received for firmly connecting the oscillating head to the frame.

Although the bridge or mass body usually has a massive weight, under certain conditions even the bridge may oscillate during use of the vibration welding device and, thus, may transfer the oscillations to components of the frame. These oscillations cause damages at the vibration welding device, in particular at the frame, especially in case of self-resonance. Cracks on the frame occur, for example, at a door drive, a bracket of a guide means and an upper profile of the frame.

For reducing the risk of damages at components of the vibration welding device, especially at the frame, it was proposed to reinforce the frame in positions having the greatest damages. Nevertheless, such a course of procedure avoided damages in the reinforced positions but new damages occurred at the next weaker position.

A feaf spring arrangement for the oscillating head of a vibration welding machine for connecting two plastic molded parts which can be moved relative to one another is described in DE 41 02 750 C1. The arrangement comprises a plurality of leaf springs which are fixed at one end to a rigid oscillating head housing and at the other end on an oscillating plate with a holding device for one of the two plastic molded parts. The leaf springs are formed by mutually independent spring elements. Each of the two ends of each spring element is detachably connected to the oscillating head housing or to the oscillating plate by a screw connection.

US 4,086,122 A describes an apparatus for welding of thermoplastic parts and the like where the heat to melt the surface or surfaces to be joined is produced by friction during high frequency rubbing. The parts are adapted to be placed on a platen which enables the mating surfaces of the parts to be brought into clamping engagement in a welding head. The welding head includes a seismic mass. Stiff flexural members support a plate, against which the parts are clamped with respect to the seismic mass, and which provides for relative vibratory motion of the mating surfaces to be joined. A hydroacoustic driver is coupled to the plate and causes the plate to execute linear vibratory motion at a high frequency, where the stiffness of the flexural members is resonant with the mass of the vibrated portions of the head. Due to the stiffness of the flexural member and the high frequency of vibration, the relative displacement of the mating surfaces to be joined during vibration can be extremely minute. When vibration stops, the restoring force due to the high stiffness of the flexural members brings the parts into alignment without an auxiliary means. The parts fuse together during cooling at the end of the welding cycle. Then the platen is released, and the welded parts may be removed from the apparatus.

Finally, a diffusion bonding method and a device thereof are described in TW 201 006 661 A, in which two workpieces are respectively fastened on a first and a second jig. When the distance between the two jigs is controlled to allow the two workpieces to become mutually bonded, alternating current is provided to a plurality of electromagnetic coils disposed at the outer side of the permanent magnets provided at two sides along the vibration direction of the first jig, thereby causing alternating magnetic repulsion and attraction between the permanent magnets. In addition, reciprocal movement is also driven in the resonant springs disposed between the two permanent magnets due to the electromagnetic wave produced by the alternating current in the electromagnetic coils, thereby allowing the first jig to vibrate. Meanwhile, the workpiece fastened on the first jig is rubbed against another mutually bonded workpiece to produce frictional heat; thus, the bonded interface of the two workpieces will be molten to form a diffusion bonding seat therebetween.

It is therefore an object of the present invention to provide an oscillating head by means of which damages to a frame of a vibration welding device can be reduced. Further, it is an object of the present invention to provide a respective frame and a vibration welding device. These objects apply to new oscillating heads, frames and vibration welding devices as well as already existing oscillating heads, frames and vibration welding devices.

### 3. Summary of the invention

The above object is solved by an oscillating head of a vibration welding device according to independent claim 1, a frame of a vibration welding device according to independent claim 6, a vibration welding device according to claim 11, a respective retrofit-kit according to independent claim 13 as well as a retrofitting method according to independent claim 16. Further preferred embodiments and developments result from the following description, the drawings as well as the appending claims.

An oscillating head of a vibration welding device according to the invention comprises a bridge, a receiving plate for a tool of the oscillating head as well as at least one spring package connecting the bridge and the receiving plate to each other, wherein the bridge comprises two first fastening surfaces, which are arranged opposite to each other and by means of which the oscillating head is fastenable at a frame, the receiving plate oscillates in use with respect to the bridge in a first plane, and the two first fastening surfaces of the bridge are symmetrical to each other and are inclined to the outside with respect to a central axis of the bridge extending perpendicular to the first plane, wherein an outer side of the respective first fastening surface encloses with the first plane a first angle α in the range of 0° < α < 90° so that the oscillating head is fastenable at the frame via the two first fastening surfaces, which are arranged inclined with respect to the first plane. Instead of referring to the central axis of the bridge, the plane of symmetry of the bridge which is perpendicular to the first or oscillating plane of the receiving plate and extends between the two oppositely arranged first fastening surfaces may also be used.

For an easier understanding, the inventive oscillating head will be described in combination with a respective frame, i.e. with respect to a complete vibration welding device. For an easier understanding, it is preferred that the bridge of the oscillating head has a rectangular shape in the first plane, i.e. the oscillating plane, wherein a longitudinal axis of the rectangular shape is arranged parallel to a de-flection direction of the at least one spring package and the two first fastening surfaces are provided at the transverse sides. Due to the symmetrical arrangement of the first fastening surfaces, wherein the plane of symmetry is arranged perpendicular to the first or oscillating plane and includes the central axis, the shape of a symmetric trapezoid results when the bridge is viewed in cross section in the deflection direction of the spring package. The smaller lower and the larger upper base of the symmetrical trapezoid is formed by respective portions of the bridge being parallel to the first plane. The remaining two sides are formed by the respective first fastening surfaces.

The frame comprises at least two supports extending perpendicular with respect to the ground, i.e. vertically, and which are arranged opposite to each other. Two second fastening surfaces are provided, one at each of the supports, by means of which the oscillating head is fastenable at the frame. The two second fastening surfaces of the frame are symmetrical to each other and are inclined to the outside with respect to a central axis of the frame extending perpendicular to the ground. An outer side of the respective second fastening surface encloses with the central axis of the frame a second angle β in the range of 0° < β < 90° so that the oscillating head is fastenable at the frame via the two second fastening surfaces, which are arranged inclined with respect to the central axis of the frame. Consequently, and as the first fastening surfaces of the oscillating head and the second fastening surfaces of the frame which face each other shall be arranged parallel to each other, again the shape of a symmetric trapezoid results in cross section. In this case, each of the lower and the upper base of the symmetrical trapezoid is formed by an imaginary line. A first imaginary line forming the upper base connects the upper end of one of the two second fastening surfaces with the upper end of the other of the two second fastening surfaces. A second imaginary line forming the lower base connects the lower end of one of the two second fastening surfaces with the lower end of the other of the two second fastening surfaces. The remaining two sides are formed by the respective second fastening surfaces.

In the respective vibration welding device, the oscillating head and the frame are connected to each other at the outer sides of the first and second fastening surfaces which face each other by means of a plurality of fastening means. Further, at least one damping element, preferably a plurality of damping elements, is provided between the outer sides of the first and second fastening surfaces which face each other. Based on the above explanation, the first α and the second angle β are complementary angles so that it applies: α + β = 90° and the respective first fastening surface of the oscillating head is arranged parallel to the corresponding second fastening surface of the frame.

The main difference to the prior art devices resulting from the above arrangement of the first and second fastening surfaces is that the first and second fastening surfaces are arranged inclined with respect to the ground instead of the fastening surfaces being parallel to the ground. Nevertheless, and at the same time, the first and second fastening surfaces which face each other in the vibration welding device are arranged parallel with respect to each other. An advantage of this arrangement is the further reduction of the transfer of the oscillation from the oscillating head, in particular in case the bridge is oscillating, to the frame. Consequently, the risk of damages at components of the vibration welding device, in particular at the frame, is significantly reduced.

Additionally, the noise caused by the vibration welding device in use can be reduced compared to the prior art devices having fastening surfaces parallel to the oscillating plane of the receiving plate and, thus, parallel to the ground. Moreover, and due to the reduction of the transfer of oscillations from the oscillating head to the frame, the amount of vibrations transferred by the vibration welding device to the ground or floor is reduced. Accordingly, and due to the inventive oscillating head, it is possible to place a vibration welding device using the inventive oscillating head on higher floors of a production site instead of the main floor and/or basement.

According to a preferred embodiment of the oscillating head, the two first fastening surfaces each have at least one first fastening possibility so that the oscillating head is fastenable at the frame by means of the at least one first fastening possibility. In general, and with respect to a fastening of the oscillating head at the frame, such fastening may be achieved by clamping means, adhesives, screwing means, etc. It is especially preferred to fasten the oscillating head by means of fastening bolts at the frame. To this end, each of the two first fastening surfaces preferably comprises at least one first bore, which is oriented perpendicular to the respective first fastening surface. By means of using fastening bolts as fastening means in combination with respective bores as fastening possibilities, the oscillating head and the frame can be fastened to each other in a particular firm manner.

In a further preferred embodiment of the oscillating head, the two first fastening surfaces are each part of a first mounting plate, wherein the two first mounting plates are in particular a separate part of the oscillating head. This embodiment results for example in case an already existing oscillating head was retrofitted to comprise the above described technical advantages of the inventive welding head, as will be explained later in detail with respect to the inventive retrofit-kit and the inventive retrofitting method. In the same way, this embodiment results if the bridge is produced with a fastening surface parallel to the first or oscillating plane of the receiving plate. In an alternative embodiment, the two first fastening surfaces may be an integral part of the bridge, which was, for example, produced by molding.

According to a still further embodiment of the oscillating head, it applies for the first angle α: 10° < α < 50°, especially 15° < α < 45° and particularly preferred 20° < α < 40°. These angle ranges for the first angle α have been found to be particularly efficient for decoupling the oscillation head and the frame. Consequently, and by means of these angle ranges, also the noise reduction and the reduction of vibrations transferred to the ground or floor is improved. This applies in particular for an angle range of the first angle α between 20° and 40°.

An inventive frame of a vibration welding device comprises at least two supports extending perpendicular with respect to the ground, i.e. vertically, and which are arranged opposite to each other, two second fastening surfaces, one at each of the supports, by means of which an oscillating head is fastenable at the frame, in particular an inventive oscillating head, wherein the two second fastening surfaces of the frame are symmetrical to each other and are inclined to the outside with respect to a central axis of the frame extending perpendicular to the ground, wherein an outer side of the respective second fastening surface encloses with the central axis of the frame a second angle β in the range of 0° < β < 90° so that the oscillating head is fastenable at the frame via the two second fastening surfaces, which are arranged inclined with respect to the central axis of the frame. Instead of referring to the central axis of the frame, the plane of symmetry of the frame which is perpendicular to the ground and extends between the two oppositely arranged supports may also be used. With respect to the technical advantages of the inventive frame, it is referred to the above explanations of the inventive oscillating head and the exemplary use thereof in a vibration welding device.

According to a preferred embodiment of the frame, the frame comprises at least four supports which outline the corners of a rectangle with respect to the ground. This arrangement of supports provides a particular stable arrangement as forces transferred from the oscillating head to the frame can be diverted to two supports per side. Consequently, the field of use for the respective vibration welding device is increased, in particular as even massive oscillating heads can be used.

Furthermore, it is preferred that the two second fastening surfaces of the frame each have at least one second fastening possibility so that the oscillating head is fastenable at the frame by means of the at least one second fastening possibility. As already explained in combination with the inventive oscillating head, and with respect to a fastening of the oscillating head at the frame, such fastening may be achieved by clamping means, adhesives, screwing means, etc. It is especially preferred to fasten the oscillating head by means of fastening bolts at the frame. To this end, each of the two second fastening surfaces preferably comprises at least one second bore, which is oriented perpendicular to the respective second fastening surface. By means of using fastening bolts, the oscillating head and the frame can be fastened to each other in a particular firm manner.

According to a further preferred embodiment of the frame, the two second fastening surfaces are each part of a second mounting plate, wherein the two second mounting plates are in particular a separate part of the frame. This embodiment results, like explained for the respective embodiment of the oscillating head, in particular in case of an already existing frame which was retrofitted to comprise the above described technical advantages of the inventive frame, as will be explained later in detail with respect to the inventive retrofit-kit and the inventive retrofitting method. As explained in the introductory part, in prior art vibration welding devices a support plate is provided at opposite supports of the frame. The second mounting plate may now be fastened at the support plate. In an alternative embodiment, the frame may be provided with a support plate already having an inclined second fastening surface so that the second fastening surface forms an integral part of the support plate.

In an also preferred embodiment of the frame, it is preferred that it applies for the second angle β: 40° < β < 80°, especially 45° < β < 75° and particularly preferred 50° < α < 70°. These angle ranges correspond to the above indicated angle ranges for the first angle α of the oscillating head. As explained in combination with the usage of a vibration welding device using the inventive oscillating head and the frame, the first angle α and the second angle β are complementary angles so that they must sum up to 90°. Consequently, choosing the first angle to be 20° would result in the second angle being 70°. Accordingly, a second angle β between 50° and 70° is particularly preferred.

A vibration welding device according to the invention comprises an inventive oscillating head and an inventive frame, wherein the first α and the second angle β are complementary angles so that it applies: α + β = 90° and the respective first fastening surface of the oscillating head is arranged parallel to the corresponding second fastening surface of the frame, wherein the oscillating head and the frame are connected to each other at the outer sides of the first and second fastening surfaces which face each other by means of a plurality of fastening means, and at least one damping element, preferably a plurality of damping elements, is provided between the outer sides of the first and second fastening surfaces which face each other. Concerning the technical details, it is referred to the above explanations regarding the inventive oscillating head to avoid repetitions. The same applies with respect to the advantages which can be achieved by means of the inventive vibration welding device.

According to a preferred embodiment of the vibration welding device, each of the fastening surfaces comprises at least one bore which is oriented perpendicular to the respective fastening surface, and the fastening means are fastening bolts. By means of this arrangement, the oscillating head can be particularly firmly connected to the frame. In addition, further fastening means may additionally be used for further improving the connection between oscillating head and frame.

A retrofit-kit according to the invention which is used for a vibration welding device having an oscillating head and a frame, wherein the oscillating head comprises a bridge having two oppositely to each other arranged fastening surfaces which are arranged parallel and/or perpendicular to an oscillating plane of a receiving plate of the oscillating head and the frame comprises two corresponding fastening surfaces which are arranged parallel and/or perpendicular to the ground, comprises: two first mounting plates which are fastenable at the fastening surfaces of the bridge, wherein each first mounting plate comprises: a first fastening surface by means of which the oscillating head is fastenable at a fastening surface of the frame being arranged parallel thereto as well as a third fastening surface by means of which the first mounting plate is fastenable at the fastening surface of the bridge, wherein the first and the third fastening surface enclose a first angle α in the range of 0° < α < 90°, and/or two second mounting plates which are fastenable at the fastening surfaces of the frame, wherein each second mounting plate comprises: a second fastening surface by means of which the oscillating head is fastenable at the frame with a fastening surface arranged parallel thereto as well as a fourth fastening surface by means of which the second mounting plate is fastenable at the fastening surface of the frame, wherein the second and the fourth fastening surface enclose a second angle β in the range of 0° < β < 90°. By means of the inventive retrofit-kit, an already existing vibration welding device, for example a vibration welding device according to the prior art as described in the background of the invention, can be provided with fastening surfaces being inclined with respect to the ground or oscillating plane, i.e. the first plane. Thus, it is not required for achieving the above described advantages of the inventive oscillating head and/or frame to replace an already existing oscillating head or frame with a new oscillating head or frame according to the invention. To the contrary, it is sufficient to mount the respective mounting plates at the oscillating head and/or the frame and reassemble the vibration welding device. Regarding the respective course of procedure, it is referred to the below explanations of the inventive retrofitting method.

According to a preferred embodiment of the retrofit-kit, the first mounting plate comprises at least one first fastening possibility as well as at least one third fastening possibility, wherein the first and the third fastening possibilities are formed at the same position with respect to a longitudinal axis of the first mounting plate. The first fastening possibilities are provided at the first fastening surface and the third fastening possibilities are provided at the third fastening surface. Thus, the third fastening possibilities serve for connecting the first mounting plate to the former fastening surface of the bridge. Consequently, the first fastening surface of the first mounting plate provides the new fastening surface for a connection to the frame. As explained for the inventive oscillation head, such fastening may generally be achieved by clamping means, adhesives, screwing means, etc.

It is especially preferred, in particular in case the oscillating head and the frame have been connected to each other by means of fastening bolts so that respective bores are already present in the fastening surfaces of the bridge and the frame, to fasten the first mounting plate by means of fastening bolts at the fastening surface of the bridge and later at the frame. To this end, especially one first bore extending perpendicular to the first fastening surface is provided as first fastening possibility, and one third bore extending perpendicular to the third fastening surface is provided as third fastening possibility. Thus, the first mounting plate can be mounted to the fastening surface of the bridge by means of respective bolts.

In a further preferred embodiment of the retrofit-kit, the second mounting plate comprises at least one second fastening possibility as well as at least one fourth fastening possibility, wherein the second and the fourth fastening possibilities are arranged at different positions with respect to a longitudinal axis of the second mounting plate. Here, like for the first mounting plate, the second fastening possibilities are provided at the second fastening surface and the fourth fastening possibilities are provided at the fourth fastening surface. Thus, the fourth fastening possibilities serve for connecting the second mounting plate to the former fastening surface of the frame. Consequently, the second fastening surface of the second mounting plate provides the new fastening surface for a connection to the oscillating head. As mentioned above, such fastening may generally be achieved by clamping means, adhesives, screwing means, etc.

For this embodiment, it is particularly preferred, specifically in case the oscillating head and the frame have been connected to each other by means of fastening bolts so that respective bores are already present in the fastening surfaces of the bridge and the frame, to fasten the second mounting plate by means of fastening bolts at the fastening surface of the frame and later at the bridge of the oscillating head. To this end, especially one second bore extending perpendicular to the second fastening surface is provided as second fastening possibility, and one fourth bore extending perpendicular to the fourth fastening surface is provided as fourth fastening possibility. Thus, the second mounting plate can be mounted to the fastening surface of the frame by means of respective bolts.

A retrofitting method according to the invention for a vibration welding device having an oscillating head and a frame, wherein the oscillating head comprises a bridge having two oppositely to each other arranged fastening surfaces, in particular each with a first bore as a first fastening possibility, wherein the fastening surfaces of the bridge are arranged parallel and/or perpendicular to an oscillating plane of a receiving plate of the oscillating head, and the frame comprises two corresponding fastening surfaces, in particular each with a second bore as a second fastening possibility, wherein the fastening surfaces of the frame are arranged parallel and/or perpendicular to the ground, wherein the bridge and the frame are connected to each other at the first and the second fastening possibilities by means of fastening means, in particular fastening bolts, comprises the following steps: removing the fastening means, in particular the fastening bolts, between bridge and frame and, thus, removing the oscillating head, providing an inventive retrofit-kit with two first mounting plates, fastening the two first mounting plates at the oscillating head and, thus, providing an inventive oscillating head, or providing a new oscillating head according to the invention, and/or providing an inventive retrofit-kit with two second mounting plates, fastening the two second mounting plates at the frame and, thus, providing an inventive frame, or providing a new frame according to the invention, and fastening the inventive oscillating head at the inventive frame by means of the fastening means, wherein at least one damping means, respectively, is provided between first and second fastening surfaces which face each other. By means of the inventive retrofitting method, the user of an already existing vibration welding device can achieve the above discussed technical advantages of the oscillating head and the frame according to the invention.

In a first alternative, this can be done by mounting a respective mounting plate to the frame and the oscillating head. In a second alternative, a respective mounting plate may only be fastened at the frame and a new oscillation head according to the invention is fastened at the frame instead of the former oscillation head. Finally, and as a third alternative, a respective mounting plate may only be fastened at the oscillating head and a new frame according to the invention may be used instead of the former frame. In each case, the user finally has an inventive vibration welding device having a reduced risk of cracks in the frame, reduced noise and reduced vibration transfer to the ground or floor.

### 4. Short description of the drawings

In the following, the present invention will be described in detail based on the drawings. In the drawings, the same reference signs denote the same elements and/or components. It shows:
- Figure 1: a perspective view of a vibration welding device,
- Figure 2: a portion of the upper part of a vibration welding device including the oscillating head in a perspective view,
- Figure 3: a cross-sectional view of an oscillating head along the longitudinal direction thereof,
- Figure 4: a portion of the upper part of a vibration welding device including a reinforcing structure in a perspective view,
- Figure 5: a portion of a vibration welding device according to a first embodiment of the present invention in a first perspective view,
- Figure 6: another portion of the vibration welding device according to the first embodiment of the present invention in a second perspective view,
- Figure 7: a cross-sectional view of a portion of a vibration welding device according to the first embodiment,
- Figure 8: a further cross-sectional view of a portion of the vibration welding device according to the first embodiment,
- Figure 9: a cross-sectional view of a first mounting plate according to an embodiment of the present invention,
- Figure 10: the first mounting plate of figure 9 in a side view,
- Figure 11: the first mounting plate of figure 9 in a perspective view,
- Figure 12: a cross-sectional view of a second mounting plate according to an embodiment of the present invention,
- Figure 13: the second mounting plate of figure 12 in a side view,
- Figure 14: the second mounting plate of figure 12 in a top view,
- Figure 15: a portion of a vibration welding device according to a second embodiment of the present invention in a first perspective view,
- Figure 16: another portion of the vibration welding device according to the second embodiment of the present invention in a second perspective view,
- Figure 17: a schematic illustration showing a symmetric trapezoid resulting when viewing an embodiment of the bridge according to the invention in cross-section,
- Figure 18: a schematic illustration showing a symmetric trapezoid resulting when viewing an embodiment of the frame according to the invention in cross-section, and
- Figure 19: a flow chart of a retrofitting method according to an embodiment of the present invention.

### 5. Detailed description of preferred embodiments

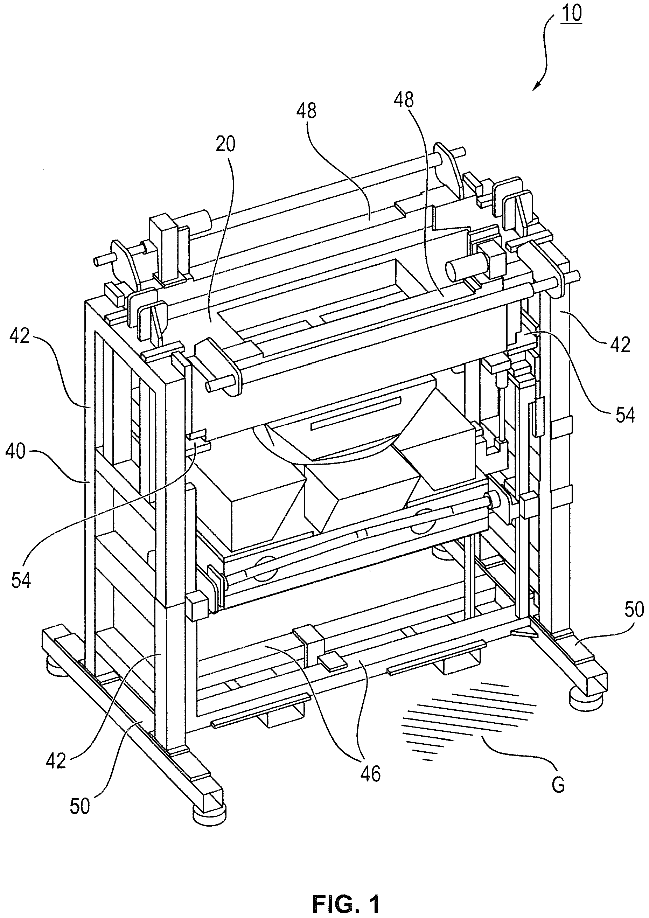

Figure 1 shows a vibration welding device 10 in a perspective view. The vibration welding device 10 comprises an oscillating head 20 and a frame 40.

The frame 40 comprises four supports 42 extending perpendicular with respect to the ground G or floor, i.e. vertically. The four supports 42 outline the corners of a rectangle with respect to the ground. Two adjacent supports 42 are connected at a lower end to a common ground bar 50. The respective construction forms a transverse side of the rectangle.

Further, the two ground bars 50 are connected to each other by means of two lower cross bars 46. At the upper end of the frame 40, the opposite supports 42 are connected to each other by means of two upper cross bars 48. Accordingly, a longitudinal extension of the lower 46 and upper cross bars 48 represents the longitudinal side of the rectangle, which is preferably longer compared to the shorter transverse side at which the ground bars 50 are arranged.

Furthermore, two support plates 54 for fastening the oscillating head 20 are provided at the frame 40, one between the two adjacent supports 42, respectively, which are connected to a common ground bar 50. Consequently, each of the support plates 54 provides a fastening surface 44 at which the oscillating head 20 can be fastened to the frame 40. The fastening surface 44 provided by the support plate 54 is oriented parallel to the ground G or floor on which the vibration welding device 10 is placed.

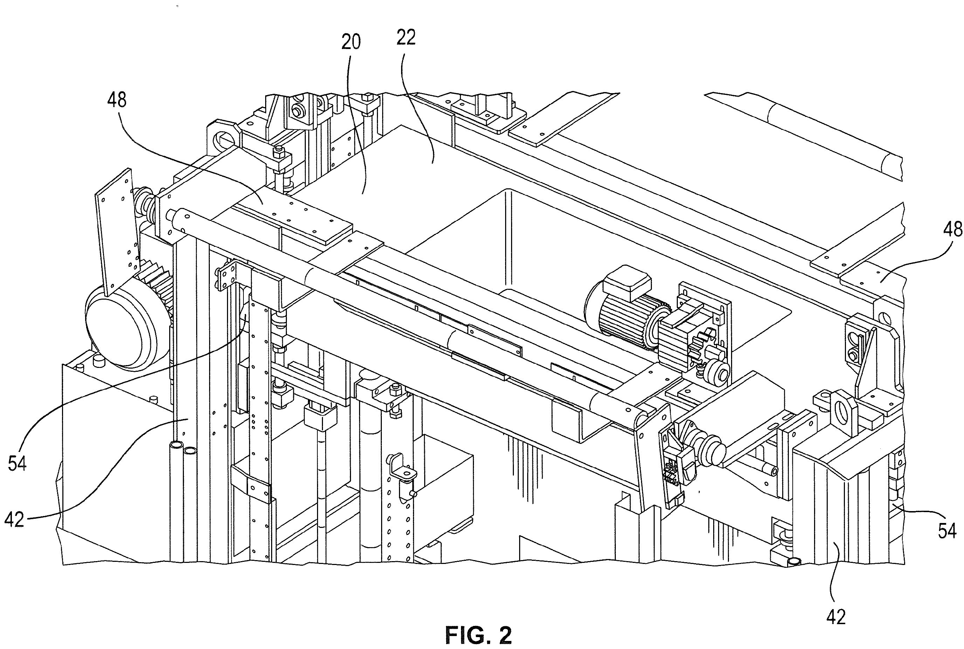

Now referring to figure 2, a portion of the upper part of the vibration welding device 10 is shown in a perspective view. Here, in particular the oscillating head 20 including a bridge 22 or, generally, a mass body can be seen.

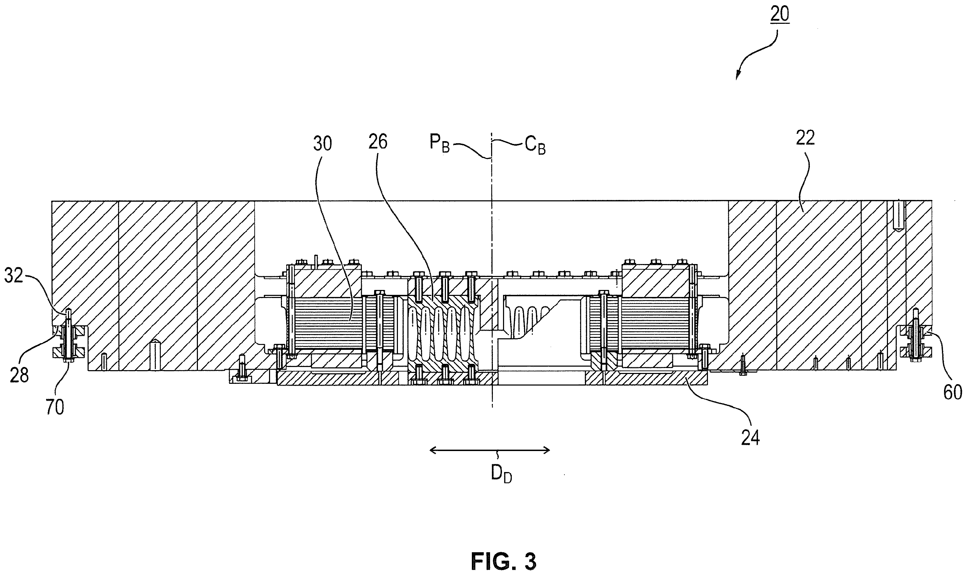

As illustrated in figure 3, the oscillating head 20 is comprised of the bridge 22 or mass body, a receiving plate 24 for receiving a tool of the oscillating head 20 and a spring package 26. The upper part of the spring package 26 is mounted to the bridge 22 and the lower part of the spring package 26 is mounted to the receiving plate 24.

Further, electromagnetic drive means 30 are provided for deflecting the lower part of the spring package 26 so that an oscillation of the spring package 26 and, thus, of the receiving plate 24 is caused. The direction in which the spring package 26 is deflected is indicated by the arrows D_{D}. Consequently, the receiving plate 24 oscillates in use in an oscillating or first plane P₁. As the oscillating head 20 is shown in figure 3 in cross section along the longitudinal axis thereof, the first P₁ or oscillating plane extends in the example of figure 3 along the longitudinal axis of the oscillating head 20 as well as transverse thereto, i.e. along the axis extending into or out of the illustration.

Furthermore, and still with respect to figure 3, a fastening surface 28 of the bridge 22 is indicated on opposite sides of the bridge 22. With respect to the rectangular shape of the bridge 22 in cross section along the longitudinal axis thereof, the fastening surfaces 28 are arranged symmetrical to each other with respect to a central axis C_{B} or plane of symmetry P_{B} of the bridge 22. The central axis C_{B} extends perpendicular to the oscillating or first plane P₁. In the same manner, the plane of symmetry P_{B} of the bridge 22 extends perpendicular to the first plane P₁.

The fastening surface 28 is formed in particular by a step at each of the transverse sides of the bridge 22. Thus, the fastening surface 28 is arranged in a plane parallel to the oscillating or first plane P₁. Further, the fastening surface 28 comprises at least one bore 32 for receiving a fastening means 70, especially a fastening bolt.

Although the bridge 22 or mass body usually has a massive weight of for example about one metric ton, under certain conditions even the bridge 22 oscillates during use of the vibration welding device 10 and transfers these oscillations to components of the frame 40. These oscillations cause damages at the vibration welding device 10, in particular at the frame 40, especially in case of self-resonance. Cracks on the frame 40 occur, for example, at a door drive, a bracket of a guide means or the upper cross bar 48 of the frame 40.

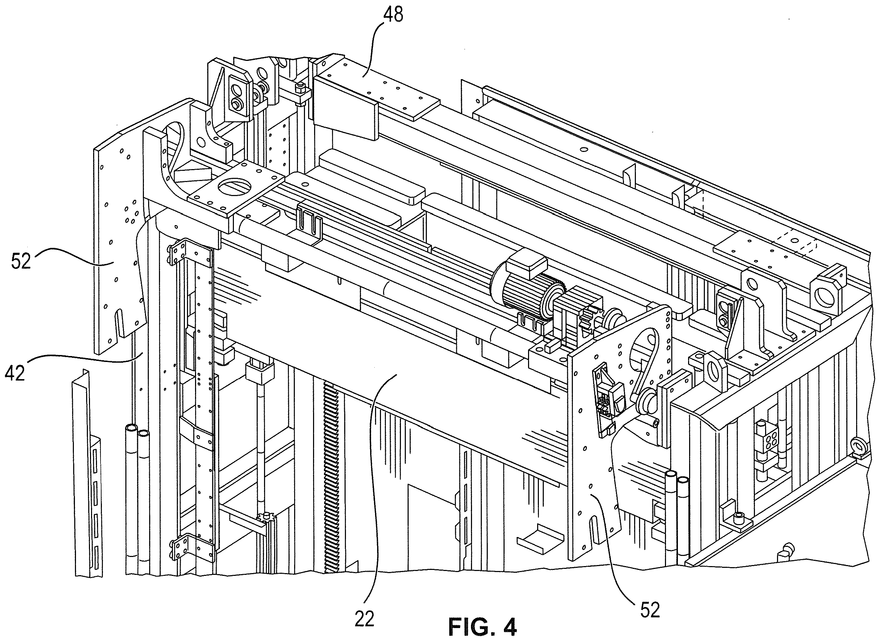

For reducing such damages, a reinforcing member 52 may be used, as shown in figure 4. Nevertheless, such a course of procedure avoids damages or cracks in the reinforced portions but new damages and cracks occur at the next weaker portion of the vibration welding device 10.

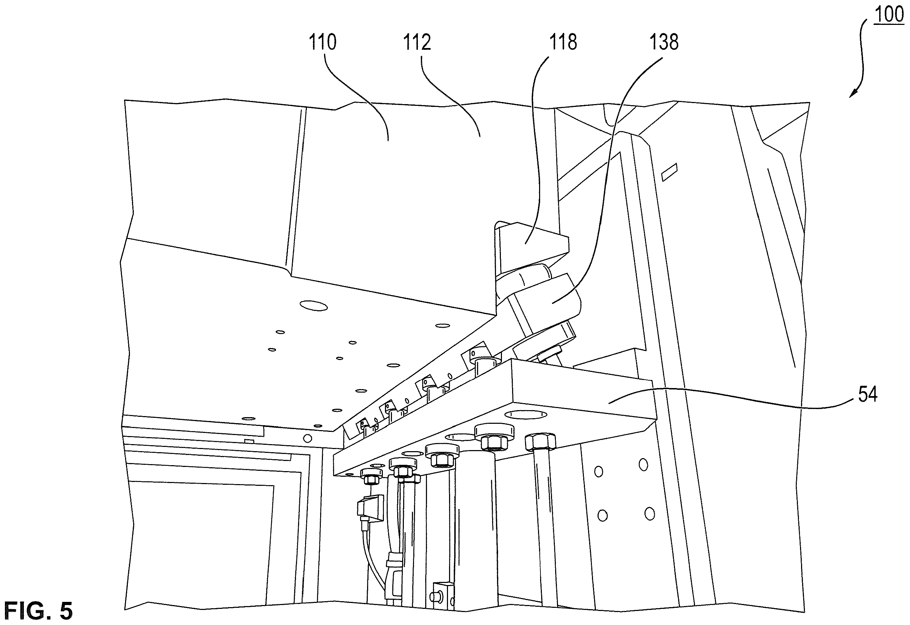

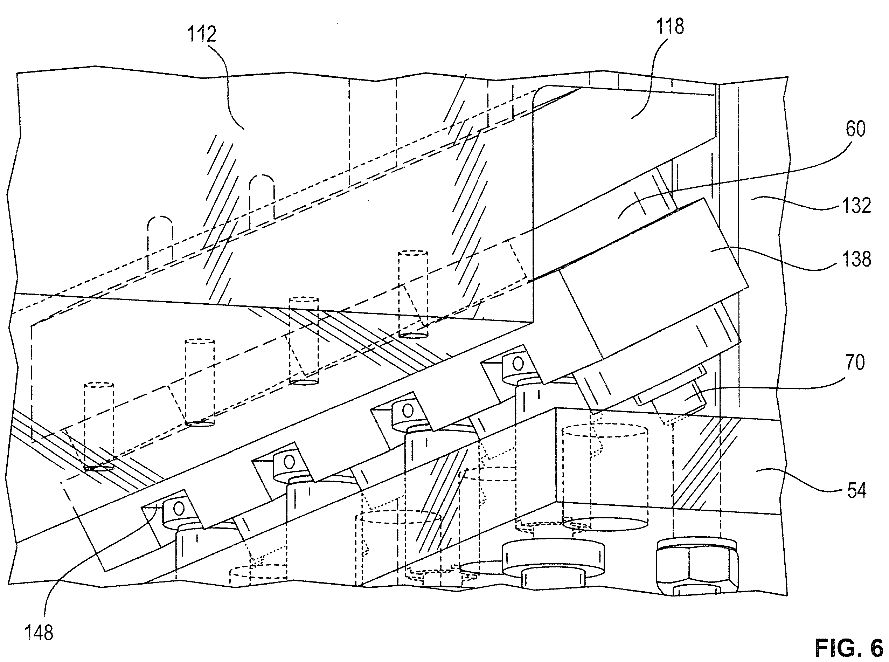

The present invention uses fastening surfaces which are inclined with respect to the oscillating plane of the receiving plate in an obtuse angle unequal to 90° for solving this problem. In the following, a first embodiment of the structure will be explained in detail with reference to figures 5 and 6 showing a part of an inventive vibration welding device 100.

As can be seen, the bridge 112 of the oscillating head 110 was provided with an inclined first fastening surface 114 instead of a fastening surface being parallel to the oscillating or first plane P₁. In the same manner, the support plate 54 of the frame 130 was provided with a second fastening surface 134 being inclined with respect to the ground G. Both, the first 114 and the fastening surfaces 134, are arranged parallel to each other.

As shown, the first fastening surface 114 is provided by means of a first mounting plate 118 which is a separate part of the oscillating head 110. The same applies in general with respect to the second fastening surface 134, which is provided by means of a second mounting plate 138 being a separate part of the frame 130, in particular of the support plate 54 of the frame 130.

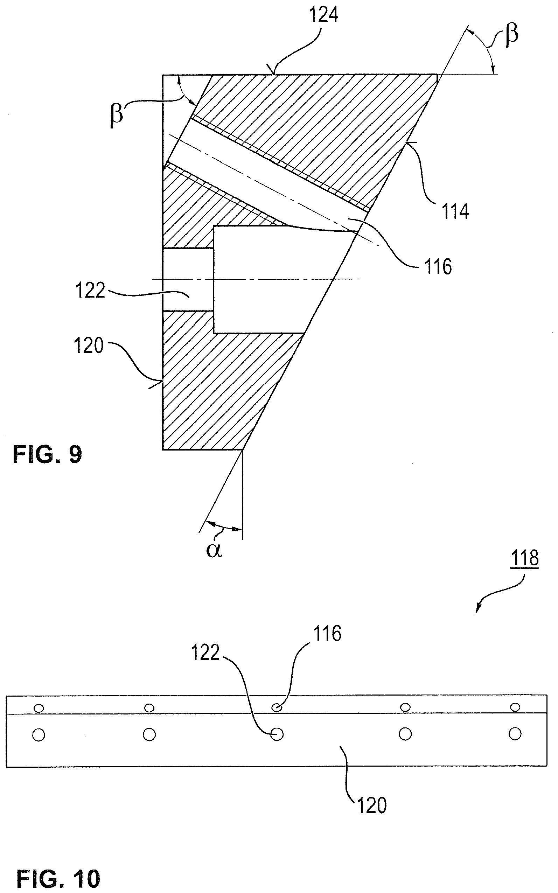

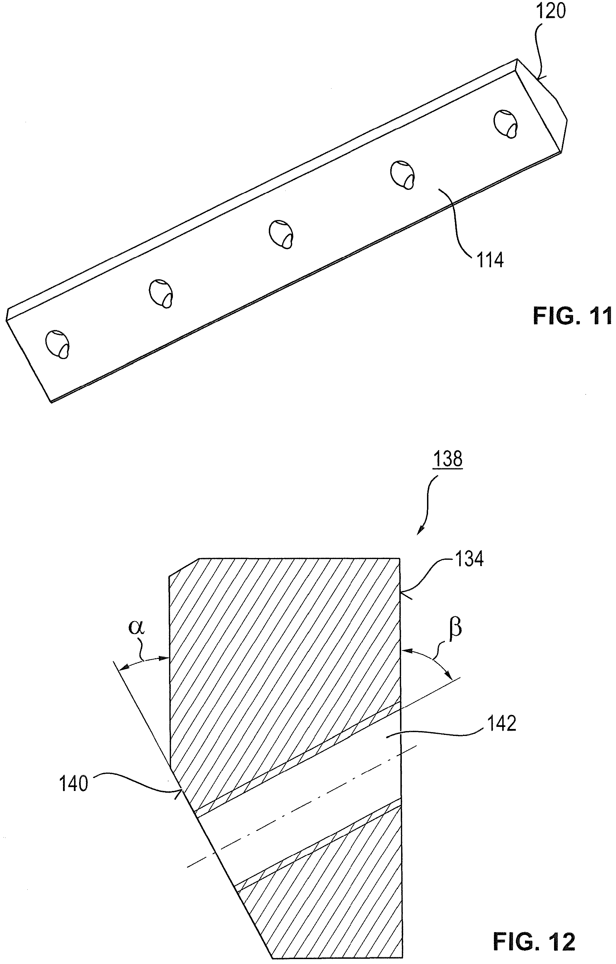

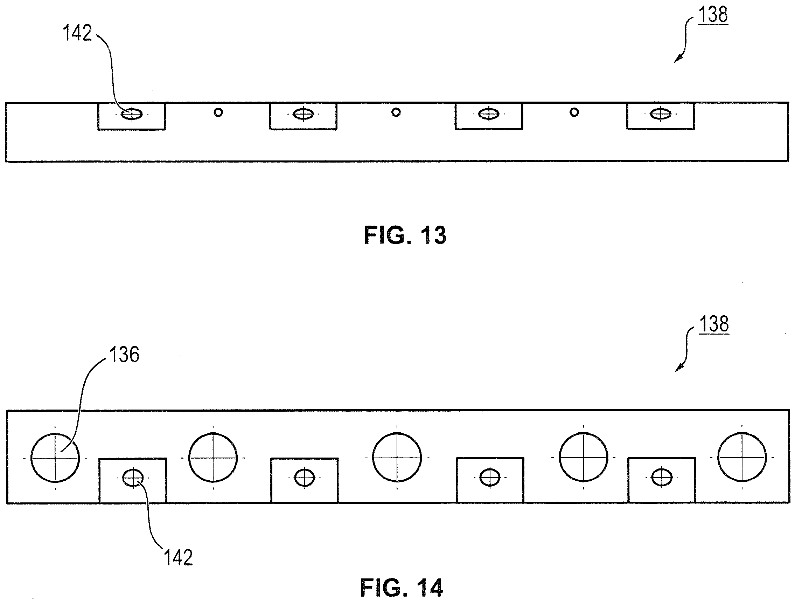

For an easier understanding of the construction of the first 118 and the second mounting plate 138, reference is now made to figures 9 to 16. In this regard, figures 9 and 10 show the mounting plates 118 and 138 in an assembled state whereas figures 11 to 13 illustrate the construction of the first mounting plate 118 and figures 14 to 16 the construction of the second mounting plate 138.

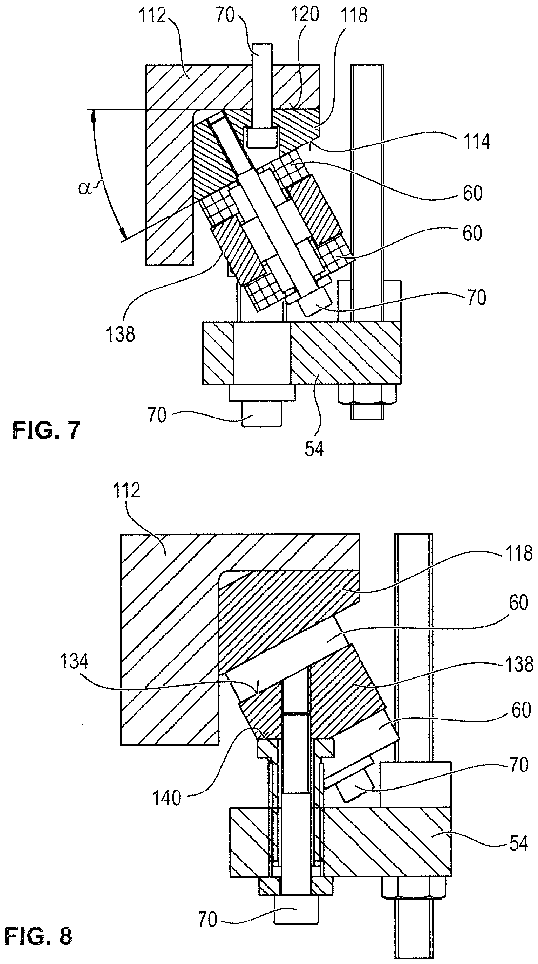

The first 118 and the second mounting plate 138 may be used for retrofitting already existing vibration welding devices. For fastening the first 118 and the second mounting plate 138 at the former fastening surfaces 28 and 44, fastening means 70 such as fastening bolts may be used. Thus, the first mounting plate 118 comprises the first fastening surface 114 by means of which the oscillating head 110 is fastenable at the second fastening surface 114 of the frame 130 as well as a third fastening surface 120 by means of which the first mounting plate 118 is fastenable at the fastening surface 28 of the bridge 22. Exemplarily, the first mounting plate 118 comprises respective first 116 and third bores 122 for receiving fastening means 70, e.g. fastening bolts. In a particularly preferred embodiment, and as shown in figures 7 to 10, the first 116 and the third bores 122 are formed at the same position with respect to a longitudinal axis of the first mounting plate 118.

For achieving the inclined arrangement, the first 114 and the third fastening surface 120 enclose a first angle α in the range of 0° < α < 90°. Preferably, the first angle α is between 20° and 40°. Correspondingly, and with respect to the bridge 112 of the oscillating head 110 as a whole, the first angle α is enclosed between an outer side of the first fastening surface 114 and the first plane, i.e. the oscillating plane or a plane parallel thereto.

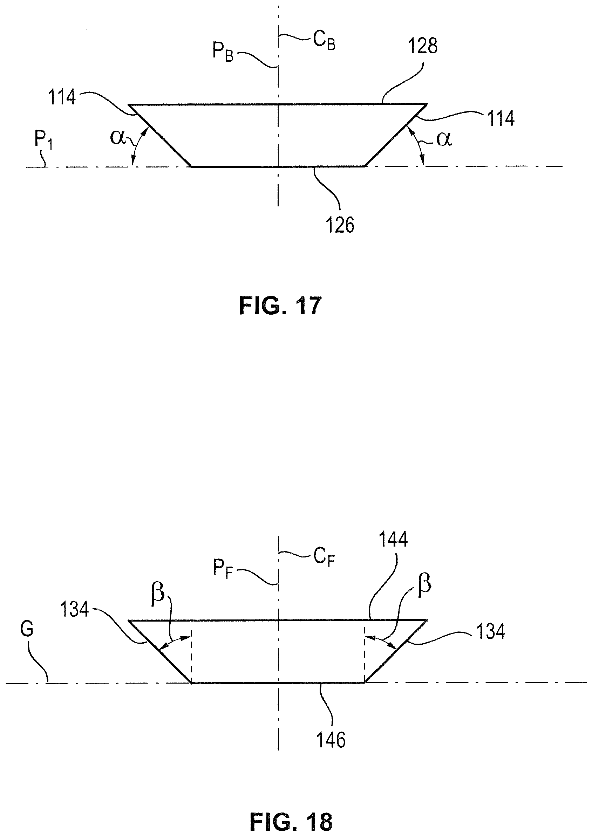

In this regard, and as schematically indicated in figure 17, the bridge 112 is formed mirror symmetrical with respect to a plane perpendicular to the first or oscillating plane. Thus, the bridge 112 has two first fastening surfaces 114 which are symmetrical to each other and are inclined to the outside with respect to a central axis C_{B} of the bridge 112 extending perpendicular to the first plane P₁. Instead of the central axis C_{B} of the bridge 112, also the plane of symmetry P_{B} of the bridge 112 extending perpendicular to the first or oscillating plane P₁ may be used.

In the embodiments shown, the bridge 112 of the oscillating head 110 has a rectangular shape in the first plane P₁. A longitudinal axis of the rectangular shape is arranged parallel to a deflection direction Do of the at least one spring package 26 and the two first fastening surfaces 114 are provided at the transverse sides. As a result, and when viewed in cross section in the deflection direction Do of the spring package 26 in use, the shape of a symmetric trapezoid results (cf. figure 17). The smaller lower 126 and the larger upper base 128 of the symmetrical trapezoid is formed by respective portions of the bridge 112 being parallel to the first plane P₁. The remaining two sides are formed by the respective first fastening surfaces 114. Consequently, and as the second angle β is the complementary angle to the first angle α, both must sum up to 90°. As a result, also the angle β is indicated at the first mounting plate 118. In particular, the second angle β is also used for providing a further inclined surface between the third fastening surface 120 and the abutting surface 124. Nevertheless, and depending on the specific application, any other angle may be used for providing the further inclined surface between the third fastening surface 120 and the abutting surface 124.

In the same manner, the two second mounting plates 138 comprise the second fastening surface 134 by means of which the oscillating head 110 is fastenable at the frame 130 as well as a fourth fastening surface 140 by means of which the second mounting plate 138 is fastenable at the fastening surface 44 of the support plate 54. Exemplarily, the second mounting plate 138 comprises respective second 136 and fourth bores 142 for receiving fastening means 70, e.g. fastening bolts. The second and the fourth bores are arranged at different positions with respect to a longitudinal axis of the second mounting plate. Preferably, the respective bores extend perpendicular to the related surface, i.e. the second bore 136 is arranged perpendicular to the second fastening surface 134 and the fourth bore 142 is arranged perpendicular to the fourth fastening surface 144.

Here, the inclined arrangement is achieved in that second 134 and the fourth fastening surface 140 enclose the second angle β in the range of 0° < β < 90°. Correspondingly, and with respect to the frame 130, the two second fastening surfaces 134 are symmetrical to each other and are inclined to the outside with respect to a central axis C_{F} of the frame 130 extending perpendicular to the ground G. Instead of the central axis C_{F} of the frame 130, also the plane of symmetry P_{F} of the frame 130 extending perpendicular to the ground G may be used. Thus, an outer side of the respective second fastening surface 134 encloses with the plane of symmetry P_{F} of the frame 130 a second angle β in the range of 0° < β < 90°. Consequently, again the shape of a symmetric trapezoid results in cross section (cf. figure 18). In this case, each of the lower and the upper base of the symmetrical trapezoid is formed by an imaginary line. The first imaginary line 144 forming the upper base connects the upper end of one of the two second fastening surfaces 134 with the upper end of the other of the two second fastening surfaces 134. The second imaginary line forming the lower base connects the lower end of one of the two second fastening surfaces 134 with the lower end of the other of the two second fastening surfaces 134. The remaining two sides are formed by the respective second fastening surfaces 134.

As can be seen in particular with reference to figures 17 and 18, the first α and the second angle β are complementary angles so that it applies: α + β = 90° and the respective first fastening surface 114 of the oscillating head 110 is arranged parallel to the corresponding second fastening surface 134 of the frame 130. Due to this relation, the first angle α can also be found at the second mounting plate 138 and the second angle β can be found at the first mounting plate 118, as explained above.

Now referring back to figures 5 to 8, for connecting the oscillating head 110 and the frame 130 to each other at the outer sides of the first 114 and second fastening surfaces 134 which face each other, a plurality of fastening means 70 is used. In the present example, five fastening means 70 are used. Instead of the fastening means 70 shown, which are in particular fastening bolts 70 extending through or screwed into respective bores, other fastening means may be used. In general such fastening may be achieved by clamping means, adhesives, screwing means, etc.

Additionally, at least one damping element 60 is provided between the outer sides of the first 114 and second fastening surfaces 134 which face each other. The number of damping elements 60 is preferably equal to the number of fastening means 70 used, i.e. five in the present embodiment.

The main difference to the prior art devices resulting from the above arrangement of the first 114 and second fastening surfaces 134 is that the fastening surfaces 114, 134 are arranged inclined with respect to the ground G instead of being parallel to the ground G while at the same time being arranged parallel with respect to each other. An advantage of this arrangement is the reduction of a transfer of an oscillation from the oscillating head 110, in particular in case the bridge 112 is oscillating, to the frame 130. Consequently, the risk of damages at components of the vibration welding device 100, in particular at the frame 130, is significantly reduced.

For example, and with respect to figure 1, the peak-peak value of the acceleration in several points, i.e. points 1 to 6, have been measured at a known vibration welding device 10 and an inventive vibration welding device 100. Comparing, for example, the values measured in point 1, it was noted that the acceleration in this point could be reduced by about 2 times from 145 m/s² for the known vibration welding device 10 to about 74 m/s² in the inventive vibration welding device 100.

Additionally, the noise caused by the vibration welding device 100 in use can be reduced compared to the prior art devices having fastening surfaces 28, 44 parallel to the oscillating plane of the receiving plate 24 and, thus, parallel to the ground G. For example, and when comparing the noise in front of the vibration welding device 10 and the vibration welding device 100 in the middle of the respective device at a height of 150 cm and at a distance of 50 cm, the noise could be reduced significantly by about 5 dB.

Moreover, and due to the reduction of the transfer of oscillations from the oscillating head 112 to the frame 130, the amount of vibrations transferred by the vibration welding device 110 to the ground or floor is reduced. Accordingly, and by means of the inventive oscillating head 112, it is possible to place a vibration welding device 100 using the inventive oscillating head 112 on higher floors of a production site instead of the main floor and/or basement.

As indicated above, by means of a retrofit-kit having two first 118 and two second mounting plates 138, an already existing vibration welding device 10 can be provided with fastening surfaces 114 and 134 being inclined with respect to the ground or oscillating plane, i.e. the first plane. Thus, it is not required for achieving the above described advantages of the inventive oscillating head 110 and/or frame 130, to replace an already existing oscillating head 20 or frame 40 with a new oscillating head 110 or frame 130 according to the invention. To the contrary, it is sufficient to mount the respective mounting plates 118, 138 at the oscillating head 20 and/or the frame 40 and reassemble the vibration welding device.

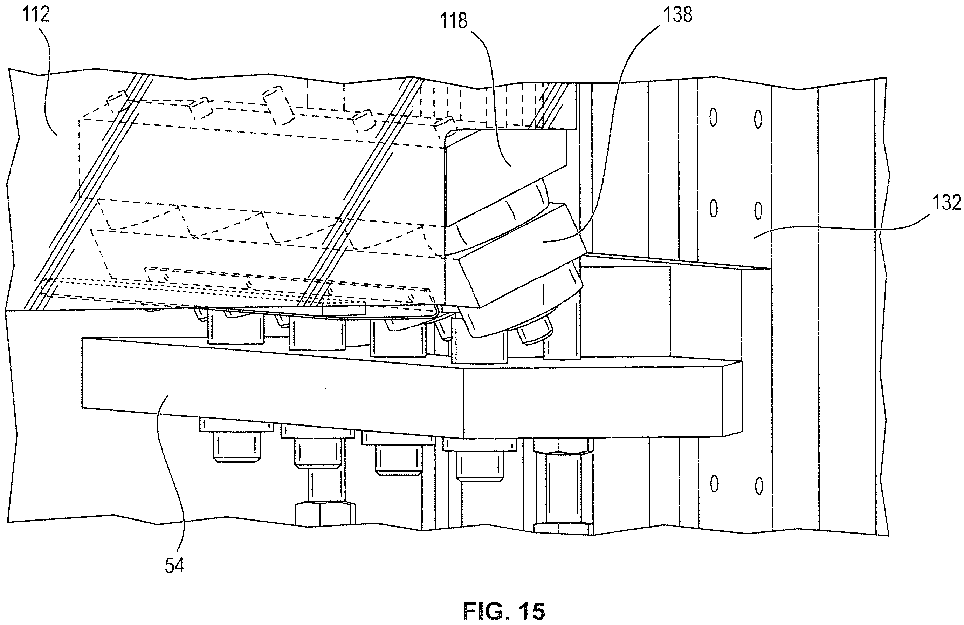

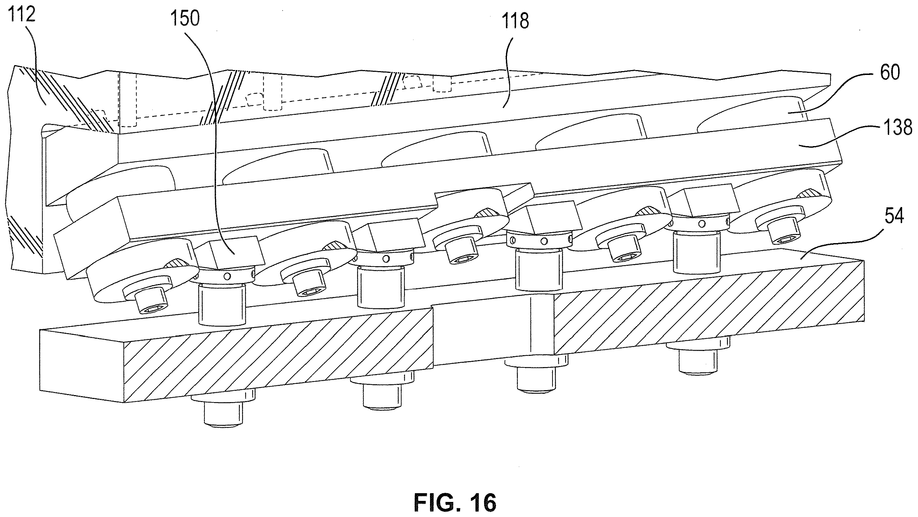

A second embodiment of the vibration welding device is shown in figures 15 and 16. The main difference to the first embodiment is the arrangement of the fourth fastening surface 140. In the first embodiment of figures 5 to 14, the fourth fastening surface 140 is provided by means of a recess 148. In the embodiment of figures 15 and 16, the fourth fastening surface 140 is provided by means of a protrusion 150.

As an alternative to the above described mounting plates 118, 138, the first fastening surface 114 is provided as an integral part of the oscillating head 110, e.g. it is produced upon manufacturing the bridge 112 of the oscillating head 110, for example by means of molding. In the same way, the second fastening surface 134 is provided as an integral part of the frame 130, in particular of the support plate 54, e.g. it is produced upon manufacturing the support plate 54 of the frame 130, for example by means of molding.

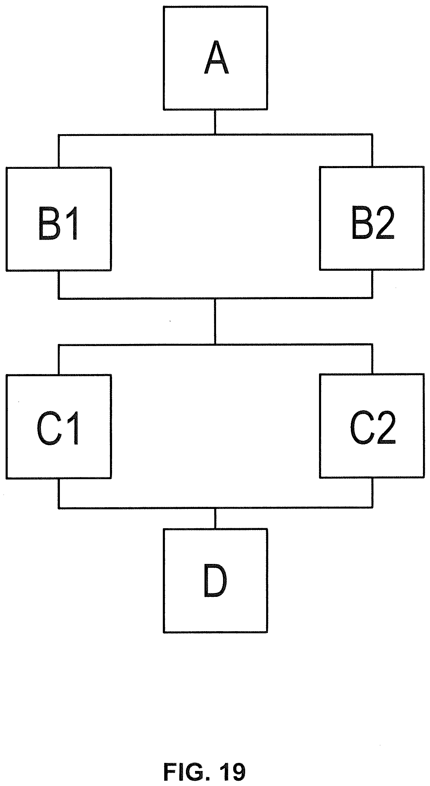

Finally, and with respect to figure 19, a retrofitting method according to an embodiment of the invention is described. As discussed above, the existing vibration welding device 10 has an oscillating head 20 and a frame 40. The oscillating head 20 comprises a bridge 22 having two oppositely to each other arranged fastening surfaces 28, in particular each with a first bore as a first fastening possibility. The fastening surfaces 28 of the bridge 22 are arranged parallel to an oscillating plane of the receiving plate 24 of the oscillating head 20. The frame comprises two corresponding fastening surfaces 44, in particular each with a second bore as a second fastening possibility, wherein the fastening surfaces 44 of the frame 40 are arranged parallel to the ground. The bridge 20 and the frame 40 are connected to each other at the first and second fastening possibilities by means of fastening means 70, in particular fastening bolts.

The method comprises as a first step removing (A) the fastening means, in particular the fastening bolts, between bridge 20 and frame 40 and, thus, removing the oscillating head 22.

In a second step B1, an inventive retrofit-kit with two first mounting plates is provided and the two first mounting plates are fastened at the oscillating head so that an inventive oscillating head is provided. Alternatively, a new oscillating head according to the invention is provided (step B2).

In a subsequent step, an inventive retrofit-kit with two second mounting plates is provided which are fastened at the frame so that an inventive frame is provided (step C1). Alternative, in step C2, a new frame according to the invention is provided.

Finally, in step D a fastening of the inventive oscillating head at the inventive frame by means of the fastening means takes place, wherein at least one damping means, respectively, is provided between first and second fastening surfaces which face each other.

In summary, in a first course of procedure a respective mounting plate is mounted to the frame and the oscillating head. According to a second course of procedure, a respective mounting plate may only be fastened at the frame and a new oscillation head according to the invention is fastened at the frame instead of the former oscillation head. Finally, and according to a third course of procedure, a respective mounting plate may only be fastened at the oscillating head and a new frame according to the invention may be used instead of the former frame. In each case, the user finally has an inventive vibration welding device having a reduced risk of cracks in the frame, reduced noise and reduced vibration transfer to the ground or floor.

### 6. List of reference signs

- 10: vibration welding device

- 20: oscillating head
- 22: bridge
- 24: receiving plate
- 26: spring package
- 28: fastening surface of the bridge
- 30: electromagnetic drive
- 40: frame
- 42: support
- 44: fastening surface of the frame
- 46: lower cross bar
- 48: upper cross bar
- 50: ground bar
- 52: reinforcing member
- 54: support plate

- 60: damping element

- 70: fastening means

- 100: vibration welding device

- 110: oscillating head
- 112: bridge
- 114: first fastening surface
- 116: first bore in the first fastening surface
- 118: first mounting plate
- 120: third fastening surface
- 122: third bore in the third fastening surface
- 124: abutting surface
- 126: lower base
- 128: upper base

- 130: frame
- 132: support
- 134: second fastening surface
- 136: second bore in the second fastening surface
- 138: second mounting plate
- 140: fourth fastening surface
- 142: fourth bore in the fourth fastening surface
- 144: upper base formed by first imaginary line
- 146: lower base formed by second imaginary line
- 148: recess
- 150: protrusion

- P₁: first plane
- α: first angle
- β: second angle
- C_{B}: central axis of the bridge
- C_{F}: central axis of the frame
- P_{B}: plane of symmetry of the bridge
- P_{F}: plane of symmetry of the frame
- D_{D}: deflection direction
- G: Ground

## Claims

1. An oscillating head (110) of a vibration welding device (100) comprising a bridge (112), a receiving plate (24) for a tool of the oscillating head (110) as well as at least one spring package (26) connecting the bridge (112) and the receiving plate (24) to each other, wherein
a) the bridge (112) comprises two first fastening surfaces (114), which are arranged opposite to each other and by means of which the oscillating head (110) is fastenable at a frame (130), and
b) the receiving plate (24) oscillates in use with respect to the bridge (112) in a first plane (P₁), **characterized in that**
c) the two first fastening surfaces (114) of the bridge (112) are symmetrical to each other and are inclined to the outside with respect to a central axis (C_{B}) of the bridge (112) extending perpendicular to the first plane (P₁), wherein an outer side of the respective first fastening surface (114) encloses with the first plane (P₁) a first angle α in the range of 0° < α < 90° so that the oscillating head (110) is fastenable at the frame (130) via the two first fastening surfaces (114), which are arranged inclined with respect to the first plane (P₁).

2. The oscillating head (110) according to claim 1, wherein the bridge (112) has a rectangular shape in the first plane (P₁), wherein a longitudinal axis of the rectangular shape is arranged parallel to a deflection direction (D_{D}) of the at least one spring package (26) and the two first fastening surfaces (114) are provided at the transverse sides.

3. The oscillating head (110) according to one of the preceding claims, wherein the two first fastening surfaces (114) each have at least one first fastening possibility, especially at least one first bore (116), respectively, which is oriented perpendicular to the respective first fastening surface (114), so that the oscillating head (110) is fastenable at the frame (130) by means of the at least one first fastening possibility.

4. The oscillating head (110) according to one of the preceding claims, wherein the two first fastening surfaces (114) are each part of a first mounting plate (118), wherein the two first mounting plates (118) are in particular a separate part of the oscillating head (110).

5. The oscillating head (110) according to one of the preceding claims, wherein it applies for the first angle α: 10° < α < 50°, especially 15° < α < 45° and particularly preferred 20° < α < 40°.

6. A frame (130) of a vibration welding device (100), comprising:
a) at least two supports (132) extending perpendicular with respect to the ground (G) and which are arranged opposite to each other, and
b) two second fastening surfaces (134), one at each of the supports (132), by means of which an oscillating head (110) is fastenable at the frame (130), in particular an oscillating head (110) according to one of the claims 1 to 5, **characterized in that**
c) the two second fastening surfaces (134) of the frame (130) are symmetrical to each other and are inclined to the outside with respect to a central axis (C_{F}) of the frame (130) extending perpendicular to the ground (G), wherein an outer side of the respective second fastening surface (134) encloses with the central axis of the frame (C_{F}) a second angle β in the range of 0° < β < 90° so that the oscillating head (110) is fastenable at the frame (130) via the two second fastening surfaces (134), which are arranged inclined with respect to the central axis of the frame (C_{F}).

7. The frame (130) according to claim 6, which comprises at least four supports (132) which outline the corners of a rectangle with respect to the ground (G).

8. The frame (130) according to claim 6 or 7, wherein the two second fastening surfaces (134) each have at least one second fastening possibility, especially at least one second bore (136), respectively, which is oriented perpendicular to the respective second fastening surface (134), so that the oscillating head (110) is fastenable at the frame (130) by means of the at least one second fastening possibility.

9. The frame (130) according to one of the claims 6 to 8, wherein the two second fastening surfaces (134) are each part of a second mounting plate (138), wherein the two second mounting plates (138) are in particular a separate part of the frame (130).

10. The frame (130) according to one of the claims 6 to 9, wherein it applies for the second angle β: 40° < β < 80°, especially 45° < β < 75° and particularly preferred 50° < β < 70°.

11. A vibration welding device (100) comprising an oscillating head (110) according to one of the claims 1 to 5 and a frame (130) according to one of the claims 6 to 10, wherein
the first α and the second angle β are complementary angles so that it applies: α + β = 90° and the respective first fastening surface of the oscillating head (110) is arranged parallel to the corresponding second fastening surface (134) of the frame (130), wherein
the oscillating head (110) and the frame (130) are connected to each other at the outer sides of the first (114) and second fastening surfaces (134) which face each other by means of a plurality of fastening means (70), and
at least one damping element (60), preferably a plurality of damping elements (60), is provided between the outer sides of the first (114) and second fastening surfaces (134) which face each other.

12. The vibration welding device (100) according to claim 11, wherein each of the fastening surfaces (114, 134) comprises at least one bore (116, 136) which is oriented perpendicular to the respective fastening surface (114, 134), and the fastening means (70) are fastening bolts.

13. A retrofit-kit for a vibration welding device (10) having an oscillating head (20) and a frame (40), wherein the oscillating head (20) comprises a bridge (22) having two oppositely to each other arranged fastening surfaces (28) which are arranged parallel and/or perpendicular to an oscillating plane of a receiving plate (24) of the oscillating head (20) and the frame (40) comprises two corresponding fastening surfaces (44) which are arranged parallel and/or perpendicular to the ground (G), wherein the retrofit-kit is **characterized in that** it comprises:
a) two first mounting plates (118) which are fastenable at the fastening surfaces (28) of the bridge (22), wherein each first mounting plate (118) comprises:
a first fastening surface (114) by means of which the oscillating head (20) is fastenable at a fastening surface (44) of the frame (40) being arranged parallel thereto as well as
a third fastening surface (120) by means of which the first mounting plate (118) is fastenable at the fastening surface (28) of the bridge (22), wherein
the first (114) and the third fastening surface (120) enclose a first angle α in the range of 0° < α < 90°, and/or
b) two second mounting plates (138) which are fastenable at the fastening surfaces (44) of the frame (40), wherein each second mounting plate (138) comprises:
a second fastening surface (134) by means of which the oscillating head (20) is fastenable at the frame (40) with a fastening surface (28) arranged parallel thereto as well as
a fourth fastening surface (140) by means of which the second mounting plate (138) is fastenable at the fastening surface (44) of the frame (40), wherein
the second (134) and the fourth fastening surface (140) enclose a second angle β in the range of 0° < β < 90°.

14. The retrofit-kit according to claim 13, wherein the first mounting plate (118) comprises at least one first fastening possibility, especially one first bore (116) extending perpendicular to the first fastening surface (114), as well as at least one third fastening possibility, especially one third bore (122) extending perpendicular to the third fastening surface (120), wherein the first and the third fastening possibilities are formed at the same position with respect to a longitudinal axis of the first mounting plate (118).

15. The retrofit-kit according to claim 13 or 14, wherein the second mounting plate (138) comprises at least one second fastening possibility, especially one second bore (136) extending perpendicular to the second fastening surface (134), as well as at least one fourth fastening possibility, especially one fourth bore (142) extending perpendicular to the fourth fastening surface (140), wherein the second and the fourth fastening possibilities are arranged at different positions with respect to a longitudinal axis of the second mounting plate (138).

16. A retrofitting method for a vibration welding device (10) having an oscillating head (20) and a frame (40), wherein the oscillating head (20) comprises a bridge (22) having two oppositely to each other arranged fastening surfaces (28), in particular each with a first bore as a first fastening possibility, wherein the fastening surfaces (28) of the bridge (22) are arranged parallel and/or perpendicular to an oscillating plane of a receiving plate (24) of the oscillating head (20), and the frame (40) comprises two corresponding fastening surfaces (44), in particular each with a second bore as a second fastening possibility, wherein the fastening surfaces (44) of the frame (40) are arranged parallel and/or perpendicular to the ground (G), wherein the bridge (22) and the frame (40) are connected to each other at the first and the second fastening possibilities by means of fastening means (70), in particular fastening bolts, wherein the retrofitting method comprises the following steps:
a) removing the fastening means (70), in particular the fastening bolts, between bridge (22) and frame (40) and, thus, removing the oscillating head (20),
b1) providing a retrofit-kit according to one of the claims 13 to 15 with two first mounting plates (118), fastening the two first mounting plates (118) at the oscillating head (20) and, thus, providing an oscillating head (110) according to one of the claims 1 to 5, or
b2) providing a new oscillating head (110) according to one of the claims 1 to 5, and/or
c1) providing a retrofit-kit according to one of the claims 13 to 15 with two second mounting plates (138), fastening the two second mounting plates (138) at the frame (40) and, thus, providing a frame (130) according to one of the claims 6 to 10, or
c2) providing a new frame (130) according to one of the claims 6 to 10, and
d) fastening the oscillating head (110) according to one of the claims 1 to 5 at the frame (130) according to one of the claims 6 to 10 by means of the fastening means (70), wherein at least one damping means (60), respectively, is provided between first (114) and second fastening surfaces (134) which face each other.

## Patentansprüche

1. Ein Schwingkopf (110) einer Vibrationsschweißvorrichtung (100) umfassend eine Brücke (112), eine Aufnahmeplatte (24) für ein Werkzeug des Schwingkopfes (110) sowie mindestens ein Federpaket (26), das die Brücke (112) und die Aufnahmeplatte (24) miteinander verbindet, wobei
a) die Brücke (112) zwei erste Befestigungsoberflächen (114) umfasst, die einander gegenüberliegend angeordnet sind und mittels derer der Schwingkopf (110) an einem Rahmen (130) befestigbar ist, und
b) die Aufnahmeplatte (24) schwingt bei Verwendung bezogen auf die Brücke (112) in einer ersten Ebene (P₁), **dadurch gekennzeichnet, dass**
c) die zwei ersten Befestigungsoberflächen (114) der Brücke (112) symmetrisch zueinander und bezogen auf eine zentrale Achse (C_{B}) der Brücke (112), die sich senkrecht zu der ersten Ebene (P₁) erstreckt, zur Außenseite hin geneigt sind, wobei eine äußere Seite der entsprechenden ersten Befestigungsoberfläche (114) mit der ersten Ebene (P₁) einen ersten Winkel α im Bereich von 0° < α < 90° einschließt, sodass der Schwingkopf (110) an dem Rahmen (130) über die zwei ersten Befestigungsoberflächen (114) befestigbar ist, die bezogen auf die erste Ebene (P₁) geneigt angeordnet sind.

2. Der Schwingkopf (110) nach Anspruch 1, wobei die Brücke (112) in der ersten Ebene (Pi) eine rechteckige Form aufweist, wobei eine Längsachse der rechteckigen Form parallel zu einer Auslenkrichtung (D_{D}) des mindestens einen Federpakets (26) angeordnet ist und die zwei ersten Befestigungsoberflächen (114) sind an den Querseiten vorgesehen.

3. Der Schwingkopf (110) nach einem der vorhergehenden Ansprüche, wobei die zwei ersten Befestigungsoberflächen (114) jeweils mindestens eine erste Befestigungsmöglichkeit aufweisen, bzw. insbesondere mindestens eine erste Bohrung (116), die senkrecht zu der entsprechenden ersten Befestigungsoberfläche (114) ausgerichtet ist, sodass der Schwingkopf (110) an dem Rahmen (130) mittels der mindestens einen ersten Befestigungsmöglichkeit befestigbar ist.

4. Der Schwingkopf (110) nach einem der vorhergehenden Ansprüche, wobei die zwei ersten Befestigungsoberflächen (114) jeweils Teil einer ersten Montageplatte (118) sind, wobei die zwei ersten Montageplatten (118) insbesondere ein separater Teil des Schwingkopfes (110) sind.

5. Der Schwingkopf (110) nach einem der vorhergehenden Ansprüche, wobei für den ersten Winkel α gilt: 10° < α < 50°, insbesondere 15° < α < 45° und insbesondere bevorzugt 20° < α < 40°.

6. Ein Rahmen (130) einer Vibrationsschweißvorrichtung (100), umfassend:
a) mindestens zwei Stützen (132), die sich bezogen auf den Boden (G) senkrecht erstrecken und einander gegenüberliegend angeordnet sind, und
b) zwei zweite Befestigungsoberflächen (134), eine an jeder Stütze (132), mittels derer ein Schwingkopf (110) an dem Rahmen (130) befestigbar ist, insbesondere ein Schwingkopf (110) nach einem der Ansprüche 1 bis 5, **dadurch gekennzeichnet, dass**
c) die zwei zweiten Befestigungsoberflächen (134) des Rahmens (130) symmetrisch zueinander und bezogen auf eine zentrale Achse (C_{F}) des Rahmens (130), die sich senkrecht zu dem Boden (G) erstreckt, zu der Außenseite hin geneigt sind, wobei eine äußere Seite der entsprechenden zweiten Befestigungsoberfläche (134) mit der zentralen Achse des Rahmens (C_{F}) einen zweiten Winkel β im Bereich von 0° < β < 90° einschließt, sodass der Schwingkopf (110) über die zwei zweiten Befestigungsoberflächen (134) an dem Rahmen (130) befestigbar ist, die bezogen auf die zentrale Achse des Rahmens (C_{F}) geneigt angeordnet sind.

7. Der Rahmen (130) nach Anspruch 6, der mindestens vier Stützen (132) umfasst, die bezogen auf den Boden (G) die Ecken eines Rechtecks darstellen.

8. Der Rahmen (130) nach Anspruch 6 oder 7, wobei die zwei zweiten Befestigungsoberflächen (134) jeweils mindestens eine zweite Befestigungsmöglichkeit aufweisen, bzw. insbesondere mindestens eine zweite Bohrung (136), die senkrecht zu der entsprechenden zweiten Befestigungsoberfläche (134) ausgerichtet ist, sodass der Schwingkopf (110) an dem Rahmen (130) mittels der mindestens einen zweiten Befestigungsmöglichkeit befestigbar ist.

9. Der Rahmen (130) nach einem der Ansprüche 6 bis 8, wobei die zwei zweiten Befestigungsoberflächen (134) jeweils Teil einer zweiten Montageplatte (138) sind, wobei die zwei zweiten Montageplatten (138) insbesondere ein separater Teil des Rahmens (130) sind.

10. Der Rahmen (130) nach einem der Ansprüche 6 bis 9, wobei für den zweiten Winkel β gilt: 40° < β < 80°, insbesondere 45° < β < 75° und insbesondere bevorzugt 50° < β < 70°.

11. Eine Vibrationsschweißvorrichtung (100) umfassend einen Schwingkopf (110) nach einem der Ansprüche 1 bis 5 und einen Rahmen (130) nach einem der Ansprüche 6 bis 10, wobei
der erste α und der zweite Winkel β Komplementärwinkel sind, sodass gilt: α + β = 90° und die entsprechende erste Befestigungsoberfläche des Schwingkopfs (110) ist parallel zu der entsprechenden zweiten Befestigungsoberfläche (134) des Rahmens (130) angeordnet, wobei der Schwingkopf (110) und der Rahmen (130) an den äußeren Seiten der ersten (114) und der zweiten Befestigungsoberfläche (134) miteinander verbunden sind, die mittels einer Mehrzahl von Befestigungsmitteln (70) einander zugewandt sind, und
mindestens ein Dämpfelement (60), vorzugsweise eine Mehrzahl von Dämpfelementen (60) ist zwischen den äußeren Seiten der ersten (114) und zweiten Befestigungsoberflächen (134) vorgesehen, die einander zugewandt sind.

12. Die Vibrationsschweißvorrichtung (100) nach Anspruch 11, wobei jede der Befestigungsoberflächen (114, 134) mindestens eine Bohrung (116, 136) aufweist, die senkrecht zu den entsprechenden Befestigungsoberflächen (114, 134) ausgerichtet ist, und die Befestigungsmittel (70) sind Befestigungsbolzen.

13. Ein Nachrüstsatz für eine Vibrationsschweißvorrichtung (10) mit einem Schwingkopf (20) und einem Rahmen (40), wobei der Schwingkopf (20) eine Brücke (22) umfasst, die zwei einander gegenüberliegend angeordnete Befestigungsoberflächen (28) aufweist, die parallel und/oder senkrecht zu einer Schwingebene einer Aufnahmeplatte (24) des Schwingkopfes (20) angeordnet sind und der Rahmen (40) umfasst zwei entsprechende Befestigungsoberflächen (44), die parallel und/oder senkrecht zu dem Boden (G) angeordnet sind, und der Nachrüstsatz ist **dadurch gekennzeichnet, dass** er umfasst:
a) zwei erste Montageplatten (118), die an den Befestigungsoberflächen (28) der Brücke (22) befestigbar sind, wobei jede erste Montageplatte (118) umfasst:
eine erste Befestigungsoberfläche (114), mittels derer der Schwingkopf (20) an einer Befestigungsoberfläche (44) des parallel dazu angeordneten Rahmens (40) befestigbar ist, sowie
eine dritte Befestigungsoberfläche (120), mittels derer die erste Montageplatte (118) an der Befestigungsoberfläche (28) der Brücke (22) befestigbar ist, wobei die erste (114) und die dritte Befestigungsoberfläche (120) einen ersten Winkel α im Bereich von 0° < α < 90° einschließen, und/oder
b) zwei zweite Montageplatten (138), die an den Befestigungsoberflächen (44) des Rahmens (40) befestigbar sind, wobei jede zweite Montageplatte (138) umfasst:
eine zweite Befestigungsoberfläche (134), mittels derer der Schwingkopf (20) an dem Rahmen (40) mit einer parallel dazu angeordneten Befestigungsoberfläche (28) befestigbar ist, sowie
eine vierte Befestigungsoberfläche (140) mittels derer die zweite Montageplatte (138) an der Befestigungsoberfläche (44) des Rahmens (40) befestigbar ist, wobei
die zweite (134) und die vierte Befestigungsoberfläche (140) einen zweiten Winkel β im Bereich von 0° < β < 90° einschließen.

14. Der Nachrüstsatz nach Anspruch 13, wobei die erste Montageplatte (118) mindestens eine erste Befestigungsmöglichkeit aufweist, insbesondere eine erste Bohrung (116), die sich senkrecht zu der ersten Befestigungsoberfläche (114) erstreckt, sowie mindestens eine dritte Befestigungsmöglichkeit, insbesondere eine dritte Bohrung (122), die sich senkrecht zu der dritten Befestigungsoberfläche (120) erstreckt, wobei die erste und die dritte Befestigungsmöglichkeit an der selben Stelle bezogen auf eine Längsachse der ersten Montageplatte (118) ausgebildet sind.

15. Der Nachrüstsatz nach Anspruch 13 oder 14, wobei die zweite Montageplatte (138) mindestens eine zweite Befestigungsmöglichkeit aufweist, insbesondere eine zweite Bohrung (136), die sich senkrecht zu der zweiten Befestigungsoberfläche (134) erstreckt, sowie mindestens eine vierte Befestigungsmöglichkeit, insbesondere eine vierte Bohrung (142), die sich senkrecht zu der vierten Befestigungsoberfläche (140) erstreckt, wobei die zweite und die vierte Befestigungsmöglichkeit an unterschiedlichen Stellen bezogen auf eine Längsachse der zweiten Montageplatte (138) angeordnet sind.

16. Ein Nachrüstverfahren für eine Vibrationsschweißvorrichtung (10) mit einem Schwingkopf (20) und einem Rahmen (40), wobei der Schwingkopf (20) eine Brücke (22) mit zwei einander gegenüberliegend angeordneten Befestigungsoberflächen (28) aufweist, insbesondere weist jede eine erste Bohrung als eine erste Befestigungsmöglichkeit auf, wobei die Befestigungsoberflächen (28) der Brücke (22) parallel und/oder senkrecht zu einer Schwingebene einer Aufnahmeplatte (24) des Schwingkopfs (20) angeordnet sind, und der Rahmen (40) umfasst zwei entsprechende Befestigungsoberflächen (44), insbesondere weist jede eine zweite Bohrung als eine zweite Befestigungsmöglichkeit auf, wobei die Befestigungsoberflächen (44) des Rahmens (40) parallel und/oder senkrecht zu dem Boden (G) angeordnet sind, wobei die Brücke (22) und der Rahmen (40) miteinander an der ersten und der zweiten Befestigungsmöglichkeit mittels Befestigungsmitteln (70), insbesondere Befestigungsbolzen, verbunden sind, wobei das Nachrüstverfahren die folgenden Schritte umfasst:
a) Entfernen des Befestigungsmittels (70), insbesondere der Befestigungsbolzen, zwischen Brücke (22) und Rahmen (40) und dadurch Entfernen des Schwingkopfes (20),
b1) Bereitstellen eines Nachrüstsatzes nach einem der Ansprüche 13 bis 15 mit zwei ersten Montageplatten (118), Befestigen der zwei ersten Montageplatten (118) an dem Schwingkopf (20) und somit Bereitstellen eines Schwingkopfes (110) nach einem der Ansprüche 1 bis 5, oder
b2) Bereitstellen eines neuen Schwingkopfes (110) nach einem der Ansprüche 1 bis 5, und/oder
c1) Bereitstellen eines Nachrüstsatzes nach einem der Ansprüche 13 bis 15 mit zwei zweiten Montageplatten (138), Befestigen der zwei zweiten Montageplatten (138) an dem Rahmen (40) und somit Bereitstellen eines Rahmens (130) nach einem der Ansprüche 6 bis 10, oder
c2) Bereitstellen eines neuen Rahmens (130) nach einem der Ansprüche 6 bis 10, und
d) Befestigen des Schwingkopfes (110) nach einem der Ansprüche 1 bis 5 an dem Rahmen (130) nach einem der Ansprüche 6 bis 10 mittels der Befestigungssmittel (70), wobei jeweils mindestens ein Dämpfungsmittel (60) zwischen einander zugewandten ersten (114) und zweiten Befestigungsoberflächen (134) vorgesehen ist.

## Revendications

1. Tête d'oscillation (110) d'un dispositif de soudage par vibrations (100) comprenant un pont (112), une plaque de réception (24) pour un outil de la tête d'oscillation (110) ainsi qu'au moins un ensemble de ressort (26) reliant le pont (112) et la plaque de réception (24) l'un à l'autre, dans laquelle
a) le pont (112) comprend deux premières surfaces de fixation (114), lesquelles sont disposées de façon opposée l'une par rapport à l'autre et au moyen desquelles la tête d'oscillation (110) peut être fixée à un cadre (130), et
b) la plaque de réception (24) oscille par rapport au pont (112) dans un premier plan (P₁) pendant l'utilisation, **caractérisé en ce que**
c) les deux premières surfaces de fixation (114) du pont (112) sont symétriques l'une par rapport à l'autre et sont inclinées vers l'extérieur par rapport à un axe central (C_{B}) du pont (112), lequel s'étend perpendiculairement au premier plan (P₁), où un côté extérieur de la première surface de fixation (114) respective forme un premier angle α dans la plage de 0° < α < 90° avec le premier plan (P₁), de sorte que la tête d'oscillation (110) peut être fixée au cadre (130) par le biais des deux premières surfaces de fixation (114), lesquelles sont agencées de façon inclinée par rapport au premier plan (P₁).

2. Tête d'oscillation (110) selon la revendication 1, dans laquelle le pont (112) présente une forme rectangulaire dans le premier plan (P₁), dans laquelle un axe longitudinal de la forme rectangulaire est agencé parallèlement à une direction de déviation (D_{D}) de l'au moins un ensemble de ressort (26) et les deux premières surfaces de fixation (114) sont disposées sur les côtés transversaux.

3. Tête d'oscillation (110) selon l'une des revendications précédentes, dans laquelle les deux premières surfaces de fixation (114) présentent chacune au moins une première possibilité de fixation, en particulier au moins un premier alésage (116), respectivement, lequel est orienté perpendiculairement à la première surface de fixation (114) respective, de sorte que la tête d'oscillation (110) peut être fixée au cadre (130) au moyen de l'au moins une première possibilité de fixation.

4. Tête d'oscillation (110) selon l'une des revendications précédentes, dans laquelle les deux premières surfaces de fixation (114) font chacune partie d'une première plaque de montage (118), dans laquelle les deux premières plaques de montage (118) constituent en particulier une partie séparée de la tête d'oscillation (110).

5. Tête d'oscillation (110) selon l'une des revendications précédentes, dans laquelle s'applique, pour le premier angle α : 10° < α < 50°, en particulier 15° < α < 45° et de façon particulièrement préférée 20° < α < 40°.

6. Cadre (130) d'un dispositif de soudage par vibrations (100), comprenant :
a) au moins deux supports (132) s'étendant perpendiculairement par rapport au sol (G) et lesquels sont agencés de façon opposée l'un par rapport à l'autre, et
b) deux deuxièmes surfaces de fixation (134), une sur chacun des supports (132), au moyen desquelles une tête d'oscillation (110) peut être fixée au cadre (130), en particulier une tête d'oscillation (110) selon l'une des revendications 1 à 5, **caractérisé en ce que**
c) les deux deuxièmes surfaces de fixation (134) du cadre (130) sont symétriques l'une par rapport à l'autre et sont inclinées vers l'extérieur par rapport à un axe central (C_{F}) du cadre (130), lequel s'étend perpendiculairement au sol (G), où un côté extérieur de la deuxième surface de fixation (134) respective forme un deuxième angle β dans la plage de 0° < β < 90° avec l'axe central du cadre (C_{F}), de sorte que la tête d'oscillation (110) peut être fixée au cadre (130) par le biais des deux deuxièmes surfaces de fixation (134), lesquelles sont agencées de façon inclinée par rapport à l'axe central du cadre (C_{F}).

7. Cadre (130) selon la revendication 6, comprenant au moins quatre supports (132) définissant les coins d'un rectangle par rapport au sol (G).

8. Cadre (130) selon la revendication 6 ou 7, dans lequel les deux deuxièmes surfaces de fixation (134) présentent chacune au moins une deuxième possibilité de fixation, en particulier au moins un deuxième alésage (136), respectivement, lequel est orienté perpendiculairement à la deuxième surface de fixation (134) respective, de sorte que la tête d'oscillation (110) peut être fixée au cadre (130) au moyen de l'au moins une deuxième possibilité de fixation.

9. Cadre (130) selon l'une des revendications 6 à 8, dans lequel les deux deuxièmes surfaces de fixation (134) font chacune partie d'une deuxième plaque de montage (138), dans lequel les deux deuxièmes plaques de montage (138) constituent en particulier une partie séparée du cadre (130).

10. Cadre (130) selon l'une des revendications 6 à 9, dans lequel s'applique, pour le deuxième angle β : 40° < β < 80°, en particulier 45° < β < 75° et de façon particulièrement préférée 50° < β < 70°.

11. Dispositif de soudage par vibrations (100) comprenant une tête d'oscillation (110) selon l'une des revendications 1 à 5 et un cadre (130) selon l'une des revendications 6 à 10, dans lequel
le premier α et le deuxième angle β sont des angles complémentaires, de sorte que s'applique : α + β = 90° et la première surface de fixation respective de la tête d'oscillation (110) est agencée parallèlement à la deuxième surface de fixation (134) correspondante du cadre (130), dans lequel la tête d'oscillation (110) et le cadre (130) sont reliés l'un à l'autre au niveau des côtés extérieurs des premières (114) et des deuxièmes surfaces de fixation (134) tournées les unes vers les autres au moyen d'une pluralité d'éléments de fixation (70), et
au moins un élément d'amortissement (60), de préférence une pluralité d'éléments d'amortissement (60), est disposé entre les côtés extérieurs des premières (114) et deuxièmes surfaces de fixation (134) tournées les unes vers les autres.

12. Dispositif de soudage par vibrations (100) selon la revendication 11, dans lequel chacune des surfaces de fixation (114, 134) comprend au moins un alésage (116, 136), lequel est orienté perpendiculairement à la surface de fixation (114, 134) respective, et les éléments de fixation (70) sont des boulons de fixation.

13. Kit de mise à jour pour un dispositif de soudage par vibrations (10) comportant une tête d'oscillation (20) et un cadre (40), dans lequel la tête d'oscillation (20) comprend un pont (22) présentant deux surfaces de fixation (28) agencées de façon opposée l'une par rapport à l'autre, lesquelles sont agencées parallèlement et/ou perpendiculairement à un plan d'oscillation d'une plaque de réception (24) de la tête d'oscillation (20) et le cadre (40) comprend deux surfaces de fixation correspondantes (44), lesquelles sont agencées parallèlement et/ou perpendiculairement au sol (G), le kit de mise à jour étant **caractérisé en ce qu'**il comprend :
a) deux premières plaques de montage (118) aptes à être fixées aux surfaces de fixation (28) du pont (22), dans lequel chaque première plaque de montage (118) comprend :
une première surface de fixation (114) au moyen de laquelle la tête d'oscillation (20) peut être fixée à une surface de fixation (44) du cadre (40), laquelle est agencée parallèlement à celle-ci, ainsi que
une troisième surface de fixation (120) au moyen de laquelle la première plaque de montage (118) peut être fixée à la surface de fixation (28) du pont (22), dans lequel
la première (114) et la troisième surface de montage (120) forment un premier angle α dans la plage de 0° < α < 90°, et/ou
b) deux deuxièmes plaques de montage (138) aptes à être fixées aux surfaces de fixation (44) du cadre (40), dans lequel chaque deuxième plaque de montage (138) comprend :
une deuxième surface de fixation (134) au moyen de laquelle la tête d'oscillation (20) peut être fixée au cadre (40) avec une surface de fixation (28) agencée parallèlement à celle-ci, ainsi que
une quatrième surface de fixation (140) au moyen de laquelle la deuxième plaque de montage (138) peut être fixée à la surface de fixation (44) du cadre (40), dans lequel
la deuxième (134) et la quatrième surface de fixation (140) forment un deuxième angle β dans la plage de 0° < β < 90°.

14. Kit de mise à jour selon la revendication 13, dans lequel la première plaque de montage (118) comprend au moins une première possibilité de fixation, en particulier un premier alésage (116) s'étendant perpendiculairement à la première surface de fixation (114) respective, ainsi qu'au moins une troisième possibilité de fixation, en particulier un troisième alésage (122) s'étendant perpendiculairement à la troisième surface de fixation (120), dans lequel la première et la troisième possibilité de fixation sont formées à la même position par rapport à un axe longitudinal de la première plaque de montage (118).

15. Kit de mise à jour selon la revendication 13 ou 14, dans lequel la deuxième plaque de montage (138) comprend au moins une deuxième possibilité de fixation, en particulier un deuxième alésage (136) s'étendant perpendiculairement à la deuxième surface de fixation (134) respective, ainsi qu'au moins une quatrième possibilité de fixation, en particulier un quatrième alésage (142) s'étendant perpendiculairement à la quatrième surface de fixation (140), dans lequel la deuxième et la quatrième possibilité de fixation sont agencées à des positions différentes par rapport à un axe longitudinal de la deuxième plaque de montage (138).

16. Procédé de mise à jour pour un dispositif de soudage par vibrations (100) comportant une tête d'oscillation (20) et un cadre (40), dans lequel la tête d'oscillation (20) comprend un pont (22) présentant deux surfaces de fixation (28) agencées de façon opposée l'une par rapport à l'autre, en particulier chacune avec un premier alésage comme première possibilité de fixation, dans lequel les surfaces de fixation (28) du pont (22) sont agencées parallèlement et/ou perpendiculairement à un plan d'oscillation d'une plaque de réception (24) de la tête d'oscillation (20), et le cadre (40) comprend deux surfaces de fixation correspondantes (44), en particulier chacune avec un deuxième alésage comme deuxième possibilité de fixation, dans lequel les surfaces de fixation (44) du cadre (40) sont agencées parallèlement et/ou perpendiculairement au sol (G), dans lequel le pont (22) et le cadre (40) sont reliés l'un à l'autre au niveau de la première et de la deuxième possibilité de fixation, au moyen d'éléments de fixation (70), en particulier de boulons de fixation, dans lequel le procédé de mise à jour comprend les étapes suivantes :
a) retrait des éléments de fixation (70), en particulier des boulons de fixation, entre le pont (22) et le cadre (40) et, par conséquent, retrait de la tête d'oscillation (20),
b1) mise à disposition d'un kit de mise à jour selon l'une des revendications 13 à 15, avec deux premières plaques de montage (118), fixation des deux premières plaques de montage (118) à la tête d'oscillation (20) et, par conséquent, mise à disposition d'une tête d'oscillation (110) selon l'une des revendications 1 à 5, ou
b2) mise à disposition d'une nouvelle tête d'oscillation (110) selon l'une des revendications 1 à 5, et/ou
c1) mise à disposition d'un kit de mise à jour selon l'une des revendications 13 à 15, avec deux deuxièmes plaques de montage (138), fixation des deux deuxièmes plaques de montage (138) au cadre (40) et, par conséquent, mise à disposition d'un cadre (130) selon l'une des revendications 6 à 10, ou
c2) mise à disposition d'un nouveau cadre (130) selon l'une des revendications 6 à 10, et
d) fixation de la tête d'oscillation (110) selon l'une des revendications 1 à 5 au cadre (130) selon l'une des revendications 6 à 10 au moyen des éléments de fixation (70), dans lequel au moins un élément d'amortissement (60), respectivement, est disposé entre les premières (114) et deuxièmes surfaces de fixation (134) tournées les unes vers les autres.
